# EUROPEAN PATENT APPLICATION

(11) **EP 4 672 530 A1**
(43) Date of publication of application: **31.12.2025**
(21) Application number: 24818300.6
(22) Date of filing: 07.03.2024
(51) Int. Cl.: H02H 7/00

(54) **APPARATUS FOR CONTROLLING CIRCUIT BREAKING MODULE, AND ENERGY STORAGE SYSTEM AND MICROGRID SYSTEM**

(30) Priority: 06.06.2023 CN 202310664519
(71) Applicant: Contemporary Amperex Technology Co., Limited, Jiaocheng District Ningde Fujian 352100 (CN)
(72) Inventor: ZHENG, Zhimin, Ningde, Fujian 352100 (CN); ZHOU, Linggang, Ningde, Fujian 352100 (CN); WU, Tianyang, Ningde, Fujian 352100 (CN)
(74) Representative: Lorenz Seidler Gossel Part. mbB
(86) International application number: PCT/CN2024/080426
(87) International publication number: WO 2024/250763

(57) **Abstract**

Embodiments of the present application provide an apparatus for controlling a circuit breaker module, an energy storage system, and a microgrid system. The circuit breaker module is connected between the energy storage system and a power system, when a working state of the circuit breaker module is an on state, a path for transmitting electric energy between the energy storage system and the power system is in an on state, and when the working state of the circuit breaker module is an off state, the path for transmitting electric energy between the energy storage system and the power system is in an off state. The apparatus includes a control circuit, the control circuit includes a switch module and a release, and the control circuit is configured to drive the circuit breaker module to change from the on state to the off state through the release when a state of the switch module changes. By means of the apparatus for controlling a circuit breaker module, the energy storage system, and the microgrid system provided in the embodiments of the present application, the circuit breaker module can be timely and effectively controlled to be disconnected.

## Description

### CROSS-REFERENCE TO RELATED APPLICATIONS

The present application claims the priority of Chinese Patent Application No. 202310664519.9 entitled "APPARATUS FOR CONTROLLING CIRCUIT BREAKER MODULE, ENERGY STORAGE SYSTEM, AND MICROGRID SYSTEM" and filed to the Chinese Patent Office on June 6, 2023, the entire content of which is incorporated herein by reference.

### TECHNICAL FIELD

The present application relates to the technical field of new energy, and in particular to an apparatus for controlling a circuit breaker module, an energy storage system, and a microgrid system.

### BACKGROUND

With the continuous development of new energy technologies, more and more energy storage systems are connected to the power grid. By connecting the energy storage system to the power grid, the random and fluctuating energy of renewable energy systems such as wind power and photovoltaics can be smoothly transmitted to the power grid, which can reduce the impact of power fluctuations of the renewable energy systems on the power grid and improve the stability and reliability of the power grid.

A circuit breaker is usually connected between the energy storage system and the power grid. When a fault occurs in the energy storage system and/or the power grid, the circuit breaker can be disconnected, thereby being capable of quickly eliminating the fault, reducing the spread of the fault, and reducing the impact of the fault on devices in the energy storage system and the power grid.

Therefore, when a fault occurs in the energy storage system and/or the power grid, how to promptly and effectively cut off the circuit breaker is one of the issues that need to be urgently addressed at present.

### SUMMARY OF THE INVENTION

Embodiments of the present application provide an apparatus for controlling a circuit breaker module, an energy storage system, and a microgrid system, such that the circuit breaker module can be timely and effectively controlled to be disconnected.

In a first aspect, an apparatus for controlling a circuit breaker module is provided, the circuit breaker module is connected between an energy storage system and a power system, when a working state of the circuit breaker module is an on state, a path for transmitting electric energy between the energy storage system and the power system is in an on state, and when the working state of the circuit breaker module is an off state, the path for transmitting electric energy between the energy storage system and the power system is in an off state. The apparatus includes a control circuit, the control circuit includes a switch module and a release, and the control circuit is configured to drive the circuit breaker module to change from the on state to the off state through the release when a state of the switch module changes.

In the embodiment of the present application, by changing a working state of a switch in the control circuit, the circuit breaker module between the energy storage system and the power system can be timely and effectively controlled to be disconnected, such that energy transmission between the energy storage system and the power system can be cut off, thereby being capable of reducing fault spread when the energy storage system and/or the power system have/has a fault. On the other hand, the remote opening operation of the circuit breaker module can be realized through the control circuit, thereby improving the convenience of opening the circuit breaker module.

In one possible implementation, the control circuit includes: a first circuit, the first circuit including a coil of a first electromagnetic mechanism and a switch module which are connected in series, where the switch module includes a first switch and/or a second switch, the first switch is an automatic control switch, and the second switch is a manual control switch; a second circuit, the second circuit including a contact of the first electromagnetic mechanism and a coil of a second electromagnetic mechanism which are connected in series; and a third circuit, the third circuit including a contact of the second electromagnetic mechanism and a control mechanism of the release which are connected in series, where an action mechanism of the release is connected to the circuit breaker module.

In the embodiment of the present application, when a state of the switch module in the first circuit changes, the first electromagnetic mechanism is used to control, in a linkage mode, power on-off states of the second circuit to change, and the second electromagnetic mechanism is used to control, in a linkage mode, power on-off states of the third circuit to change, so as to enable an external signal of the control mechanism of the release in the third circuit to change, thereby driving the action mechanism of the release to act to drive the circuit breaker module to be disconnected. In this way, the circuit breaker module can be disconnected timely and effectively.

In one possible implementation, the second circuit further includes a third switch, where the third switch is connected in series with the contact of the first electromagnetic mechanism and the coil of the second electromagnetic mechanism, and the second switch and the third switch are configured in a mode that states of the second switch and the third switch change simultaneously by pressing a button, and the states of the second switch and the third switch are the same.

The redundant third switch is arranged in the second circuit. When other devices in the control circuit, such as the first electromagnetic mechanism, fail to work normally, the third switch can change from a closed state to an off state, thereby being capable of driving the circuit breaker module to be disconnected timely and effectively.

In one possible implementation, the control circuit is configured to drive the circuit breaker module to change from the on state to the off state through the release when the state of the switch module changes from a closed state to an off state.

In the embodiment of the present application, when the switch module of the control circuit is disconnected, the circuit breaker module can be driven to be disconnected through the release, so that the circuit breaker module can be disconnected timely and effectively.

In one possible implementation, the apparatus further includes: a first controller, configured to control the first switch to change from a closed state to an off state when it is detected that a fault occurs in the energy storage system and/or the power system.

In the embodiment of the present application, when a fault occurs in the energy storage system and/or the power system, the first switch can be automatically controlled through the first controller to be disconnected, thereby being capable of disconnecting the circuit breaker module timely and effectively, reducing a fault spread scope, and protecting devices in the energy storage system and the power system as much as possible.

In one possible implementation, the first controller is configured to adjust a first input signal in a sensing mechanism of a first electronic control device so as to control a contact of the first electronic control device to change from a closed state to an off state, where the contact of the first electronic control device is the first switch, and the first input signal includes a current, voltage, impedance, frequency, temperature, pressure or light signal.

In the embodiment of the present application, when a fault occurs in the energy storage system and/or the power system, the input signal of the sensing mechanism of the first electronic control device can be adjusted through the first controller to enable the contact of the first electronic control device to be disconnected, so as to achieve the purpose of disconnecting the first switch.

In one possible implementation, the first circuit also includes a coil of a third electromagnetic mechanism, where the coil of the third electromagnetic mechanism is connected in parallel with the coil of the first electromagnetic mechanism; and the apparatus further includes: a second controller, configured to determine, according to a change in a state of a contact of the third electromagnetic mechanism, that a fault occurs in the energy storage system and/or the power system.

In the embodiment of the present application, the second controller can be used to promptly and accurately determine, according to the change in the state of the contact of the third electromagnetic mechanism, that a fault occurs in the energy storage system and/or the power system.

In one possible implementation, the second circuit further includes a fourth switch, the fourth switch being connected in series with the contact of the first electromagnetic mechanism and the control mechanism of the release, where the first electromagnetic mechanism is a normally open electromagnetic mechanism; and the apparatus further includes: a third controller, configured to control the fourth switch to change from a closed state to an off state when it is determined that a fault occurs in the energy storage system and/or the power system.

By arranging the fourth switch in the second circuit, when some other devices in the control circuit, such as the first electromagnetic mechanism, cannot be disconnected normally, the coil of the second electromagnetic mechanism in the second circuit can be powered off by disconnecting the redundantly arranged fourth switch, thereby driving a change of the contact of the second electromagnetic mechanism in the third circuit, enabling the external signal of the control mechanism of the release to change, and driving a movement mechanism of the release to move to drive the circuit breaker module to be disconnected. In this way, the circuit breaker module can be disconnected timely and reasonably.

In one possible implementation, the third controller is configured to adjust a second input signal in a sensing mechanism of a second electronic control device so as to control a contact of the second electronic control device to change from a closed state to an off state, where the contact of the second electronic control device is the fourth switch, and the second input signal includes a current, voltage, impedance, frequency, temperature, pressure or light signal.

In the embodiment of the present application, the input signal of the sensing mechanism of the second electronic control device can be adjusted through the third controller to enable the contact of the second electronic control device to be disconnected, so as to achieve the purpose of disconnecting the fourth switch.

In one possible implementation, the control circuit is configured in a mode that when the switch module changes from the closed state to the off state, the contact of the second electromagnetic mechanism changes from the off state to the closed state, so that the circuit breaker module changes from the on state to the off state.

In the embodiment of the present application, when the switch module is disconnected, the contact of the second electromagnetic mechanism in the control circuit is closed, and then the release is used to timely and effectively drive the circuit breaker module to be disconnected.

In one possible implementation, the third circuit further includes a fifth switch, where the fifth switch is connected in series with the contact of the second electromagnetic mechanism and the control mechanism of the release; and the apparatus further includes: a fourth controller, configured to control the fifth switch to change from an off state to a closed state when the contact of the second electromagnetic mechanism changes from the off state to the closed state, so that the circuit breaker module changes from the on state to the off state.

In the embodiment of the present application, when the contact of the second electromagnetic mechanism is closed, that is, when a fault occurs in the energy storage system and/or the power system, the fifth switch is controlled to be closed through the fourth controller, so that the third circuit can be flexibly controlled to be powered on, and then the circuit breaker module can be flexibly controlled to be disconnected.

In one possible implementation, the fourth controller is configured to determine information of a current or power between the energy storage system and the power system when the contact of the second electromagnetic mechanism changes from the off state to the closed state; when the current or power between the energy storage system and the power system is less than or equal to a preset threshold, the fifth switch is controlled to change from the off state to the closed state; or, when the current or power between the energy storage system and the power system is greater than or equal to the preset threshold, the current or power between the energy storage system and the power system is controlled to decrease, and the fifth switch is controlled to change from the off state to the closed state after preset time from when the contact of the second electromagnetic mechanism changes from the off state to the closed state.

In the embodiment of the present application, when the contact of the second electromagnetic mechanism is closed, the five switch can also be controlled to be closed in combination with the current or power between the energy storage system and the power system. In this way, when the current or power between the energy storage system and the power system is relatively small, the fifth switch can be immediately controlled to be closed; when the current or power between the energy storage system and the power system is relatively large, the current or power between the energy storage system and the power system can be first controlled to decrease, and then the fifth switch can be controlled to be closed. In this way, the impact of a large current on the energy storage system can be reduced, so that the performance of the energy storage system can be improved and the service life of the energy storage system can be prolonged.

In one possible implementation, the fourth controller is configured to adjust a third input signal in a sensing mechanism of a third electronic control device so as to control a contact of the third electronic control device to change from an off state to a closed state, where the contact of the third electronic control device is the fifth switch, and the third input signal includes a current, voltage, impedance, frequency, temperature, pressure or light signal.

In the embodiment of the present application, the input signal of the sensing mechanism of the third electronic control device can be adjusted through the fourth controller to enable the contact of the third electronic control device to be disconnected, so as to achieve the purpose of disconnecting the fifth switch, thereby being capable of disconnecting the circuit breaker module.

In one possible implementation, the second controller is further configured to send indication information to the first controller when it is determined that a fault occurs in the energy storage system and/or the power system.

In the embodiment of the present application, the second controller can send the indication information of a fault occurring in the energy storage system and/or the power system to the first controller, so that the first controller can determine whether a state of manually switching the switch or a state of automatically switching the switch is available when a fault occurs in the energy storage system and/or the power system.

In one possible implementation, the apparatus further includes: a fifth controller, configured to control a direct current switch in the energy storage system to change from a closed state to an off state when the circuit breaker module is in the off state.

In the embodiment of the present application, the direct current switch can be controlled to be disconnected when the circuit breaker module is in the off state, which can reduce the impact of the arcing problem caused by the direct current switch being disconnected under load on the energy storage system.

In one possible implementation, the second controller and the third controller are the same controller.

In the embodiment of the present application, the second controller and the third controller are the same controller, which can realize the integration of input of a fault signal (determining that a fault occurs in the energy storage system and/or the power system) and output of the fault signal (disconnecting the fourth switch), thereby improving the efficiency of outputting the fault signal and facilitating timely disconnecting the circuit breaker module. At the same time, output of the fault signal can also be controlled by a fault input signal to perform redundancy control on the second circuit through the fourth switch, so as to accurately and effectively disconnect the circuit breaker module.

In a second aspect, an energy storage system is provided, and the energy storage system includes a battery and the apparatus for controlling a circuit breaker module in the above first aspect and any possible implementation of the first aspect, where the circuit breaker module is connected between the energy storage system and a power system.

In a third aspect, a microgrid system is provided, and the microgrid system includes an energy storage system, a power system, a circuit breaker module, and the apparatus for controlling a circuit breaker module in the above first aspect and any possible implementation of the first aspect.

### BRIEF DESCRIPTION OF DRAWINGS

FIG. 1 is a schematic diagram of an architecture of a microgrid system according to an embodiment of the present application;
FIG. 2 is a structural schematic diagram of an apparatus for controlling a circuit breaker according to an embodiment of the present application;
FIG. 3 is a structural schematic diagram of an apparatus for controlling a circuit breaker according to an embodiment of the present application;
FIG. 4 is a structural schematic diagram of an apparatus for controlling a circuit breaker according to an embodiment of the present application;
FIG. 5 is a structural schematic diagram of an apparatus for controlling a circuit breaker according to an embodiment of the present application;
FIG. 6 is a schematic diagram of a local structure of an apparatus for controlling a circuit breaker according to an embodiment of the present application;
FIG. 7 is a schematic diagram of a local structure of an apparatus for controlling a circuit breaker according to an embodiment of the present application;
FIG. 8 is a structural schematic diagram of an apparatus for controlling a circuit breaker according to an embodiment of the present application;
FIG. 9 is a schematic diagram of a local structure of an apparatus for controlling a circuit breaker according to an embodiment of the present application;
FIG. 10 is a structural schematic diagram of an apparatus for controlling a circuit breaker according to an embodiment of the present application;
FIG. 11 is a schematic diagram of a local structure of an apparatus for controlling a circuit breaker according to an embodiment of the present application;
FIG. 12 is a structural schematic diagram of an apparatus for controlling a circuit breaker according to an embodiment of the present application;
FIG. 13 is a structural schematic diagram of an apparatus for controlling a circuit breaker according to an embodiment of the present application;
FIG. 14 is a schematic block diagram of an energy storage system according to an embodiment of the present application; and
FIG. 15 is a schematic block diagram of a microgrid system according to an embodiment of the present application.

### DETAILED DESCRIPTION

Embodiments of the present application are described in further detail below in conjunction with the drawings and embodiments. The embodiments of the present application are described in further detail below in conjunction with the accompanying drawings and embodiments.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," etc. in the specification and the claims of the present application as well as the above drawings are used to distinguish different objects, rather than to describe a specific order or primary-secondary relationship.

In the present application, the term "and/or" is only an association relation describing associated objects, which means that there may be three relations, for example, A and/or B may represent three situations: A exists alone, both A and B exist, and B exists alone. In addition, the character "/" herein generally means that the associated objects before and after it are in an "or" relationship.

In the description of the present application, it should be noted that, unless otherwise explicitly defined or limited, terms such as "connected" and "connection" should be interpreted broadly. For example, connected may be directly connected or indirectly connected through an intermediary. For another example, connection may be an electrical connection or a mechanical connection. For those of ordinary skill in the art, the specific meanings of the above terms in the present application may be understood according to specific circumstances.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

With the continuous development of new energy technologies, more and more energy storage systems are connected to the power grid. By connecting the energy storage system to the power grid, the random and fluctuating energy of renewable energy systems such as wind power and photovoltaics can be smoothly transmitted to the power grid, which can reduce the impact of power fluctuations of the renewable energy systems on the power grid and improve the stability and reliability of the power grid.

A circuit breaker is usually connected between the energy storage system and the power grid. When a fault occurs in the energy storage system and/or the power grid, the circuit breaker can be disconnected, thereby being capable of quickly eliminating the fault, reducing the spread of the fault, and reducing the impact of the fault on devices in the circuit.

In view of this, embodiments of the present application provide an apparatus for controlling a circuit breaker module, an energy storage system, and a microgrid system. The circuit breaker module is connected between an energy storage system and a power system, when a working state of the circuit breaker module is an on state, a path for transmitting electric energy between the energy storage system and the power system is in an on state, and when the working state of the circuit breaker module is an off state, the path for transmitting electric energy between the energy storage system and the power system is in an off state. The apparatus includes a control circuit, the control circuit includes a switch module and a release, and the control circuit is configured to drive the circuit breaker module to change from the on state to the off state through the release when a state of the switch module changes.

In the embodiment of the present application, by changing a working state of a switch in the control circuit, the circuit breaker module between the energy storage system and the power system can be timely and effectively controlled to be disconnected, such that energy transmission between the energy storage system and the power system can be cut off, thereby being capable of reducing fault spread when the energy storage system and/or the power system have/has a fault. On the other hand, the remote opening operation of the circuit breaker module can be realized through the control circuit, thereby improving the convenience of opening the circuit breaker module.

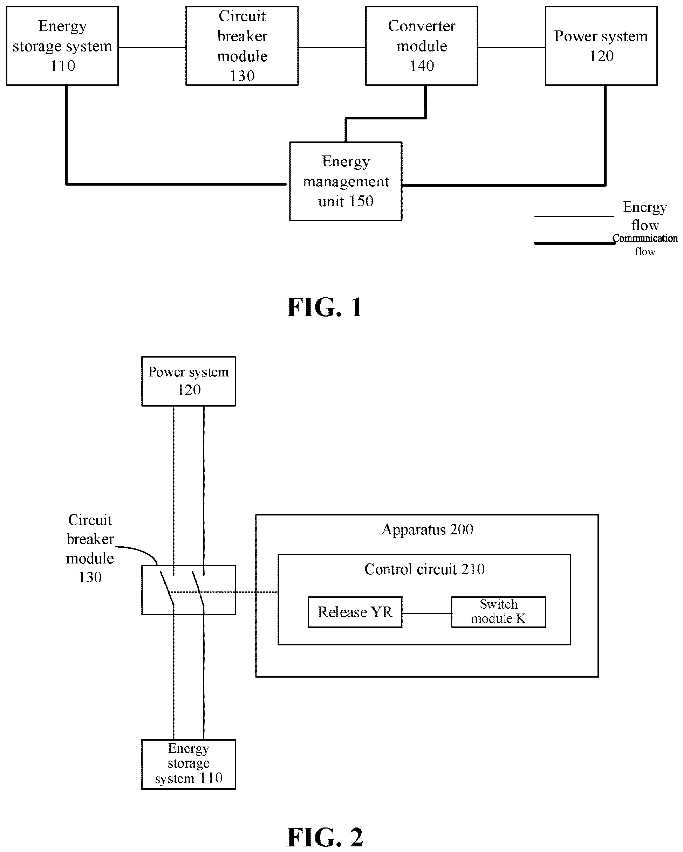

FIG. 1 is a schematic diagram of an architecture 100 of a microgrid system according to an embodiment of the present application.

The architecture 100 includes an energy storage system 110, a power system 120, a circuit breaker module 130, a converter module 140, and an energy management unit 150.

The converter module 140 is connected between the energy storage system 110 and the power system 120. The converter module 140 may be a bidirectional converter module such as a power conversion system (PCS) for converting an alternating current and a direct current, and is configured to control energy transmission between the energy storage system 110 and the power system 120.

The circuit breaker module 130 is connected between the energy storage system 110 and the power system 120. When the circuit breaker module 130 is disconnected, an electrical connection between the energy storage system 110 and the power system 120 is cut off, and energy cannot be transmitted between the energy storage system 110 and the power system 120.

In some embodiments of the present application, the circuit breaker module 130 may include a circuit breaker or a switch or the like.

In some embodiments of the present application, the circuit breaker module 130 may be connected between the energy storage system 110 and the converter module 140. Optionally, the circuit breaker module 130 may be connected between the converter module 140 and the power system 120.

In some embodiments of the present application, the power system 120 may include a power grid such as a regional power grid, a power distribution power grid, or a power supply power grid.

In some embodiments of the present application, the power system 120 may include a load. For example, the energy storage system 110 may transmit energy between the converter module 140 and an alternating current load.

The energy management unit 150 may obtain information of at least one of the energy storage system 110, the power system 120, or the converter module 140, etc., so as to perform power control and energy management. For example, the energy management unit 150 may obtain a rated power and rated capacity of the energy storage system. For example, the energy management unit 150 may obtain a rated power and required energy of the power grid.

In the embodiment of the present application, the energy storage system 110 may include at least one battery. The energy storage system 110 is provided with a battery management system (BMS) to monitor battery status information such as a state of charge (SOC), temperature, and current of a battery. The energy storage system 110 may send the status information of the battery to the energy management unit 140.

In some embodiments of the present application, the energy storage system 110 may be connected to an energy generation system, and the energy generation system may transmit energy to the energy storage system 110. Optionally, the energy generation system may include a renewable energy system such as a wind power generation system, a photovoltaic power generation system or a tidal power generation system. Optionally, the energy generation system may also include a nuclear power generation system, a thermal power generation system or a hydropower generation system.

FIG. 2 is a schematic diagram of an apparatus for controlling a circuit breaker module according to an embodiment of the present application.

The circuit breaker module 130 is connected between the energy storage system 110 and the power system 120. When a working state of the circuit breaker module 130 is an on state, a path for transmitting electric energy between the energy storage system 110 and the power system 120 is in an on state. When the working state of the circuit breaker module 130 is an off state, the path for transmitting electric energy between the energy storage system 110 and the power system 120 is in an off state.

The apparatus 200 for controlling the circuit breaker module 130 includes a control circuit 210, and the control circuit 210 includes a switch module K and a release YR. The control circuit 210 is configured to drive the circuit breaker module 130 to change from the on state to the off state through the release YR when a state of the switch module K changes.

The state of the switch module K includes an off state or a closed state.

In some embodiments of the present application, the circuit breaker module 130 may include a circuit breaker or a switch or the like.

In some embodiments of the present application, the release YR may include an undervoltage release, an overvoltage release, an electromagnetic release, or a shunt release.

When an external signal acts in a control mechanism of the release YR, an action mechanism of the release YR can be driven to act, thereby driving the circuit breaker module 130 to be disconnected.

When the state of the switch module K in the control circuit changes, external information passing through the control mechanism of the release YR changes, thereby being capable of driving the action mechanism of the release YR to act, so that the circuit breaker module 130 changes from the on state to the off state.

The state of the switch module K changes, which may be the switch module K changing from the closed state to the off state (or the switch module K being disconnected), or the switch module K changing from the off state to the closed state (or the switch module K being closed).

In the embodiments of the present application, by changing the working state of the switch module K in the control circuit 210, the circuit breaker module 130 between the energy storage system 110 and the power system 120 can be timely and effectively controlled to be disconnected, such that energy transmission between the energy storage system 110 and the power system 120 can be cut off, thereby being capable of reducing fault spread when the energy storage system 110 and/or the power system 120 have/has a fault. On the other hand, the remote opening operation of the circuit breaker module 130 can be realized through the control circuit 210, thereby improving the convenience of opening the circuit breaker module 130.

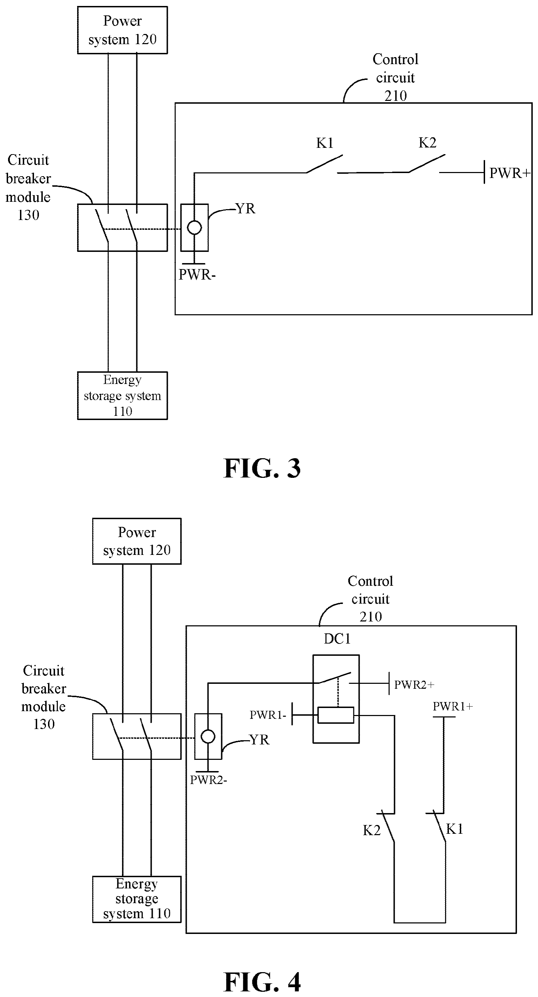

In some embodiments of the present application, as shown in FIG. 3, the control circuit 210 may include a first circuit. The first circuit includes the release YR and the switch module K which are connected in series, where the switch module K includes a first switch K1 and/or a second switch K2, the first switch K1 is an automatic control switch, and the second switch K2 is a manual control switch.

In this embodiment, when the state of the switch module K (the first switch K1 and/or the second switch K2) changes, the circuit breaker module 130 can be driven to change from the on state to the off state through the release YR.

For example, the first circuit includes the release YR and the first switch K1. By automatically controlling the switch K1 to be closed, the external signal (such as a current, voltage, etc.) of the control mechanism of the release YR changes (for example, a voltage across a control mechanism of the undervoltage release is lower than a rated voltage of the undervoltage release), thereby driving the action mechanism of the release YR to act to drive the circuit breaker module 130 to change from the on state to the off state.

For example, the first circuit includes the release YR and the second switch K2. By manually controlling the switch K2 to be closed, the external signal (such as the current, voltage, etc.) of the control mechanism of the release YR changes (for example, both ends of a control mechanism of the shunt release are powered on and excited), thereby driving the action mechanism of the release YR to act to drive the circuit breaker module 130 to change from the on state to the off state.

For another example, the first circuit includes the release YR, the first switch K1, and the second switch K2. By automatically controlling the first switch K1 to be disconnected and/or manually controlling the second switch K2 to be disconnected, the external signal (such as the current, voltage, etc.) of the control mechanism of the release YR changes (for example, the voltage across the control mechanism of the undervoltage release is lower than the rated voltage of the undervoltage release), thereby driving the action mechanism of the release YR to act to drive the circuit breaker module 130 to change from the on state to the off state.

In some embodiments of the present application, as shown in FIG. 4, the control circuit 210 includes a first circuit and a second circuit.

The first circuit includes a coil of a first electromagnetic mechanism DC1 and a switch module K which are connected in series, where the switch module K includes a first switch K1 and/or a second switch K2, the first switch K1 is an automatic control switch, and the second switch K2 is a manual control switch.

The second circuit includes a contact of the first electromagnetic mechanism DC1 and a control mechanism of the release YR which are connected in series, where the action mechanism of the release YR is connected to the circuit breaker module 130.

In this embodiment, the switch module K may include only the first switch K1, or only the second switch K2, or may include both the first switch K1 and the second switch K2.

The electromagnetic mechanism may include a contactor, an electromagnetic relay, or a device having the same functions as a contactor or an electromagnetic relay.

In this embodiment, a state of the switch module K (the first switch K1 and/or the second switch K2) in the first circuit can be changed, so that power on-off states of the coil of the first electromagnetic mechanism DC1 in the first circuit can be changed, which drives a state of the contact of the first electromagnetic mechanism DC1 in the second circuit to change, so that the external signal of the control mechanism of the release YR in the second circuit changes, thereby driving the action mechanism of the release YR to act to drive the circuit breaker module 130 to change from the on state to the off state. A state of the contact of the first electromagnetic mechanism DC1 includes an off state and a closed state.

For example, the first circuit includes the coil of the first electromagnetic mechanism DC1 and the first switch K1 which are connected in series. When the first switch K1 and/or the second switch K2 change/changes from an off state to a closed state, the coil of the first electromagnetic mechanism DC1 changes from the power-off state to the power-on state, which drives the state of the contact of the first electromagnetic mechanism DC1 to switch from the off state to the closed state, so that the external signal of the control mechanism of the release YR in the second circuit changes (for example, a coil of the shunt release is powered on), thereby enabling the action mechanism of the release YR to act to drive the circuit breaker module 130 to change from the on state to the off state. The first electromagnetic mechanism DC1 is a normally open electromagnetic mechanism.

For the normally open electromagnetic mechanism, when the coil of the electromagnetic mechanism is powered off, the contact of the electromagnetic mechanism is disconnected; and when the coil of the electromagnetic mechanism is powered on, the contact of the electromagnetic mechanism is closed.

For example, the first circuit includes the coil of the first electromagnetic mechanism DC1, the first switch K1, and the second switch K2 which are connected in series. When the first switch K1 and/or the second switch K2 change/changes from the closed state to the off state, the coil of the first electromagnetic mechanism DC1 changes from the power-on state to the power-off state, which drives the state of the contact of the first electromagnetic mechanism DC1 to switch from the off state to the closed state, so that the external signal of the control mechanism of the release YR in the second circuit changes (for example, the coil of the shunt release is powered on), thereby enabling the action mechanism of the release YR to act to drive the circuit breaker module 130 to change from the on state to the off state. The first electromagnetic mechanism DC1 is a normally closed electromagnetic mechanism.

For the normally closed electromagnetic mechanism, when the coil of the electromagnetic mechanism is powered off, the contact of the electromagnetic mechanism is closed; and when the coil of the electromagnetic mechanism is powered on, the contact of the electromagnetic mechanism is disconnected.

In the embodiment of the present application, the state of the switch or the contact changes, which may be the state of the switch or the contact changing from the closed state to the off state, that is, the switch or the contact is disconnected, or the state of the switch or the contact changing from the off state to the closed state, that is, the switch or the contact is closed. The circuit breaker module 130 changes from the on state to the off state, that is, the circuit breaker module 130 is disconnected.

The power on-off states of the coil of the electromagnetic mechanism change. It may be that the coil of the electromagnetic mechanism changes from the power-on state to the power-off state, i.e., the coil of the electromagnetic mechanism is powered off, or the coil of the electromagnetic mechanism changes from the power-off state to the power-on state, i.e., the coil of the electromagnetic mechanism is powered on.

In the embodiment of the present application, the change of the power on-off states of the second circuit can be controlled in a linkage mode by the change of the state of the first switch K1 and/or the second switch K2 in the first circuit, so that the external signal of the control mechanism of the release YR in the second circuit changes, and the action mechanism of the release YR is driven to act, thereby being capable of timely and effectively controlling the circuit breaker module 130 to be disconnected.

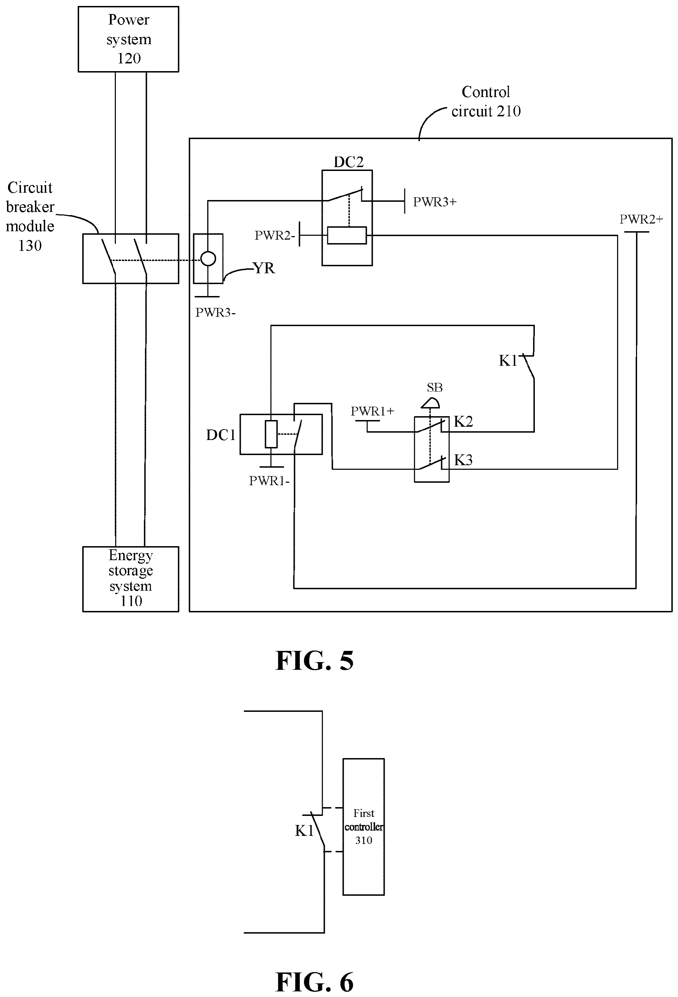

In some embodiments of the present application, as shown in FIG. 5, the control circuit includes the first circuit, the second circuit, and a third circuit.

The first circuit includes a coil of a first electromagnetic mechanism DC1 and a switch module K which are connected in series, where the switch module K includes a first switch K1 and/or a second switch K2, the first switch K1 is an automatic control switch, and the second switch K2 is a manual control switch.

The second circuit includes a contact of the first electromagnetic mechanism DC1 and a coil of a second electromagnetic mechanism DC2 which are connected in series.

The third circuit includes a contact of the second electromagnetic mechanism DC2 and a control mechanism of a release YR which are connected in series, where an action mechanism of the release YR is connected to the circuit breaker module 130.

The switch module K may include only the first switch K1, or only the second switch K2, or may include both the first switch K1 and the second switch K2.

The electromagnetic mechanism may include a contactor, an electromagnetic relay, or a device having the same functions as a contactor or an electromagnetic relay.

In this embodiment, the state of the first switch K1 and/or the second switch K2 in the first circuit can be changed, so that power on-off states of the coil of the first electromagnetic mechanism DC1 in the first circuit can be changed, which drives the state of the contact of the first electromagnetic mechanism DC1 in the second circuit to change, then enables power on-off states of the coil of the second electromagnetic mechanism DC2 in the second circuit to change, and drives the state of the contact of the second electromagnetic mechanism DC2 in the third circuit to change, so that an external signal of the control mechanism of the release YR in the third circuit is enabled to change, thereby driving the action mechanism of the release YR to act to drive the circuit breaker module 130 to change from the on state to the off state.

For example, the first circuit includes the coil of the first electromagnetic mechanism DC1, the first switch K1, and the second switch K2 which are connected in series. When the first switch K1 and/or the second switch K2 change/changes from the closed state to the off state, the coil of the first electromagnetic mechanism DC1 in the first circuit changes from the power-on state to the power-off state, which drives the contact of the first electromagnetic mechanism DC1 in the second circuit to change from the closed state to the off state, further enables the coil of the second electromagnetic mechanism DC2 in the second circuit to change from the power-on state to the power-off state, and then drives the contact of the second electromagnetic mechanism DC2 in the third circuit to change from the off state to the closed state, so that the external signal of the control mechanism of the release YR in the third circuit is enabled to change, and the action mechanism of the release YR acts to drive the circuit breaker module 130 to change from the on state to the off state. The first electromagnetic mechanism DC1 is a normally open electromagnetic mechanism, and the second electromagnetic mechanism is a normally closed electromagnetic mechanism.

For example, the first circuit includes the coil of the first electromagnetic mechanism DC1 and the second switch K2 which are connected in series. When the second switch K2 changes from the off state to the closed state, the coil of the first electromagnetic mechanism DC1 in the first circuit changes from the power-off state to the power-on state, which drives the contact of the first electromagnetic mechanism DC1 in the second circuit to change from the off state to the closed state, further enables the coil of the second electromagnetic mechanism DC2 in the second circuit to change from the power-off state to the power-on state, and then drives the contact of the second electromagnetic mechanism DC2 in the third circuit to change from the off state to the closed state, so that the external information of the control mechanism of the release YR in the third circuit is enabled to change, thereby driving the action mechanism of the release YR to act to drive the circuit breaker module 130 to change from the on state to the off state. The first electromagnetic mechanism DC1 is a normally open electromagnetic mechanism, and the second electromagnetic mechanism is a normally open electromagnetic mechanism.

It should be understood that the state of the contact of the electromagnetic mechanism includes an off state or a closed state.

The first electromagnetic mechanism DC1 may be a normally open electromagnetic mechanism or a normally closed electromagnetic mechanism. The second electromagnetic mechanism D2 may be a normally open electromagnetic mechanism or a normally closed electromagnetic mechanism. The types of the first electromagnetic mechanism DC1 and the second electromagnetic mechanism DC2 may be determined according to the specific design of the control circuit 210.

In the embodiment of the present application, when the state of the first switch K1 and/or the second switch K2 in the first circuit change/changes, the first electromagnetic mechanism DC1 is used to control, in a linkage mode, power on-off states of the second circuit to change, and the second electromagnetic mechanism DC2 is used to control, in a linkage mode, power on-off states of the third circuit to change, thereby enabling the external signal of the control mechanism of the release YR in the third circuit to change, and driving the action mechanism of the release YR to act to drive the circuit breaker module 130 to be disconnected. In this way, the circuit breaker module 130 can be disconnected timely and effectively.

In some embodiments of the present application, the second circuit further includes a third switch K3 connected in series, and the second switch K2 and the third switch K3 are configured in a mode that states of the second switch K2 and the third switch K3 change simultaneously by pressing a button, and the states of the second switch K2 and the third switch K3 are the same.

As shown in FIG. 5, the second circuit includes the contact of the first electromagnetic mechanism DC1, the coil of the second battery mechanism DC2, and the third switch K3 which are connected in series. The states of the second switch K2 and the third switch K3 can change simultaneously by pressing an emergency stop button SB.

Optionally, in this embodiment, the second switch K2 and the third switch K3 are switched from the closed state to the off state at the same time.

Optionally, in this embodiment, the first electromagnetic mechanism DC1 may be a normally open electromagnetic mechanism. The second electromagnetic mechanism DC2 may be a normally closed electromagnetic mechanism or a normally closed electromagnetic mechanism.

For example, the first circuit includes the coil of the first electromagnetic mechanism DC1 and the second switch K2 which are connected in series. When the second switch K2 changes from the closed state to the off state, the coil of the first electromagnetic mechanism DC1 in the first circuit changes from the power-on state to the power-off state, which drives the state of the contact of the first electromagnetic mechanism DC1 in the second circuit to change from the closed state to the off state, further enables the coil of the second electromagnetic mechanism DC2 in the second circuit to change from the power-on state to the power-off state, and then drives the state of the contact of the second electromagnetic mechanism in the third circuit to change from the off state to the closed state, so that the external signal of the control mechanism of the release YR in the third circuit is enabled to change, and the action mechanism of the release YR acts to drive the circuit breaker module 130 to change from the on state to the off state. The first electromagnetic mechanism is a normally open electromagnetic mechanism, and the second electromagnetic mechanism is a normally closed electromagnetic mechanism.

In this embodiment, when at least one of the state of the contact of the first electromagnetic mechanism DC1 in the second circuit changing from the closed state to the off state and the third switch K3 switching from the closed state to the off state is executed, the coil of the second electromagnetic mechanism DC2 in the second circuit can be changed from the power-on state to the power-off state.

Therefore, the redundant third switch K3 is arranged in the second circuit. When other devices in the control circuit, such as the first electromagnetic mechanism DC1, fail to work normally, the third switch K3 can change from the closed state to the off state, thereby being capable of driving the circuit breaker module 130 to be disconnected timely and effectively.

In some embodiments of the present application, the control circuit 210 is configured to drive the circuit breaker module 130 to change from the on state to the off state through the release YR when the switch module K changes from the closed state to the off state.

That is, the switch module K changes from the closed state to the off state, so that the external signal (such as the current, voltage, etc.) of the control mechanism of the release YR changes, and the action mechanism of the release YR acts, thereby driving the circuit breaker module 130 to be disconnected.

For example, the first circuit includes the coil of the first electromagnetic mechanism DC1 and the first switch K1 which are connected in series. When the first switch K1 changes from the closed state to the off state, the circuit breaker module 130 can be driven to change from the on state to the off state through the tripper YR.

For example, the first circuit includes the coil of the first electromagnetic mechanism DC1 and the second switch K2 which are connected in series. When the second switch K2 changes from the closed state to the off state, the circuit breaker module 130 can be driven to be disconnected through the release YR.

For another example, the first circuit includes the coil of the first electromagnetic mechanism DC1, the first switch K1, and the second switch K2 which are connected in series. When the first switch K1 changes from the closed state to the off state and/or the second switch K2 changes from the closed state to the off state, the circuit breaker module 130 can be driven to change from the on state to the off state through the release YR.

In the embodiment of the present application, when the first switch K1 and/or the second switch K2 of the control circuit 210 are/is disconnected, the circuit breaker module 130 can be driven to be disconnected through the release, so that the circuit breaker module 130 can be disconnected timely and effectively.

In some embodiments of the present application, as shown in FIG. 6, the apparatus 200 for controlling a circuit breaker module further includes a first controller 310, and the first controller 310 is configured to control the state of the first switch K1 to change when it is detected that a fault occurs in the energy storage system 110 and/or the power system 120.

Optionally, the first controller 310 is configured to control the first switch K1 to be closed, i.e., change from the off state to the closed state, when it is detected that a fault occurs in the energy storage system 110 and/or the power system 120.

Optionally, the first controller 310 is configured to control the first switch K1 to be disconnected, i.e., change from the closed state to the off state when it is detected that a fault occurs in the energy storage system 110 and/or the power system 120. When it is detected that a fault occurs in the energy storage system 110 and/or the power system 120, the first switch K1 is controlled to be disconnected, so that the external signal of the control mechanism of the release YR can be changed, thereby being capable of driving the action mechanism of the release YR to act to drive the circuit breaker module 130 to be disconnected.

When the first controller 210, such as an energy management system (EMS), detects that a temperature of the energy storage system 110 and/or the power system 120 is too high, a current thereof is too large, or a fire occurs, it can be determined that a fault occurs in the energy storage system 110 and/or the power system 120.

In this embodiment, no matter how many circuits are included in the control circuit 210, the apparatus 200 may include the first controller 310.

In the embodiment of the present application, when a fault occurs in the energy storage system 110 and/or the power system 120, the first switch K1 can be automatically controlled by the first controller 310 to be disconnected, thereby being capable of disconnecting the circuit breaker module 130 timely and effectively, reducing a fault spread scope, and protecting devices in the energy storage system 110 and the power system 120 as much as possible.

Optionally, the first controller 310 may be connected to the first switch K1 via a mechanical movement mechanism. When it is detected that a fault occurs in the energy storage system 110 and/or the power system 120, the first controller 310 may control the mechanical movement mechanism to move, thereby enabling the first switch K1 to be disconnected through the movement of the mechanical movement mechanism.

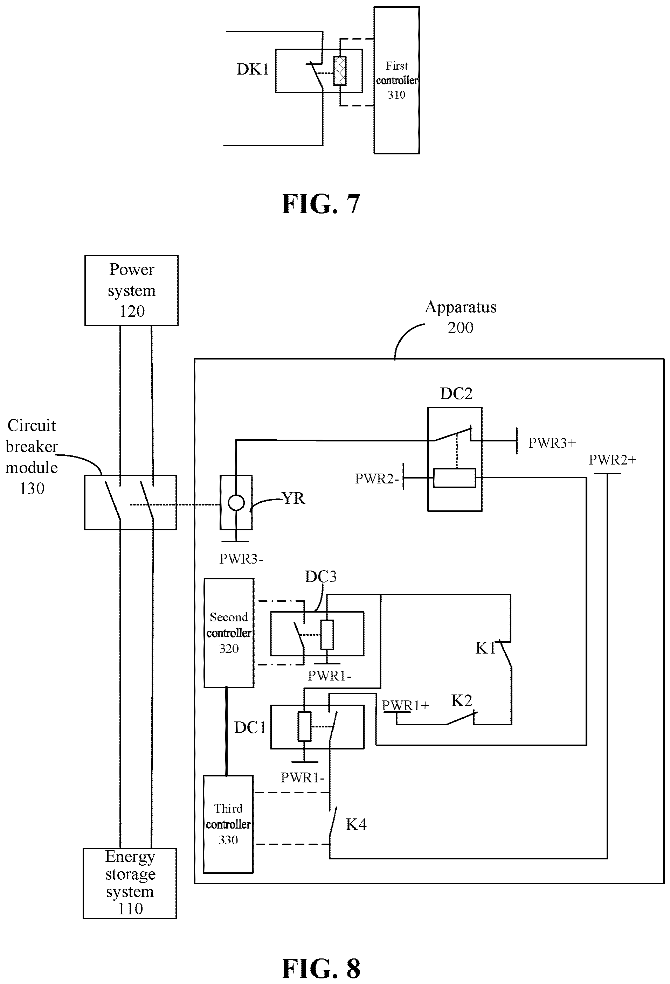

Optionally, as shown in FIG. 7, the first controller 310 may be used to adjust a first input signal in a sensing mechanism of a first electronic control device DK1 to control the contact of the first electronic control device DK1 to change from the closed state to the off state. The contact of the first electric control device DK1 is the first switch K1, and the first input signal includes a current, voltage, impedance, frequency, temperature, pressure or light signal.

That is, the first controller 310 may adjust the input signal in the sensing mechanism of the first electric control device DK1 to enable the contact of the first electric control device DK1 to be disconnected.

In the embodiment of the present application, the electronic control device may be a relay, a contactor, or a device having similar functions as a relay, a contactor, or the like.

For example, the first controller 310 may power on the sensing mechanism (such as a coil) of the first electronic control device DK1 to control the contact of the first electronic control device DK1 to be disconnected, where the first electronic control device DK1 may be a normally closed electronic control device.

In the embodiment of the present application, when a fault occurs in the energy storage system 110 and/or the power system 120, the input signal of the sensing mechanism of the first electronic control device DK1 can be adjusted through the first controller 310 so that the contact of the first electronic control device DK1 is disconnected, so as to achieve the purpose of disconnecting the first switch, thereby disconnecting the circuit breaker module 130 timely and effectively, reducing the fault spread scope, and protecting devices in the energy storage system 110 and the power system 120 as much as possible.

FIG. 8 is a schematic diagram of an apparatus for controlling a circuit breaker module according to an embodiment of the present application.

In some embodiments of the present application, the apparatus 200 includes a control circuit 210, and the control circuit 210 includes a first circuit, a second circuit, and a third circuit.

The first circuit includes a coil of a first electromagnetic mechanism DC1 and a switch module K which are connected in series, where the switch module K includes a first switch K1 and/or a second switch K2, the first switch K1 is an automatic control switch, and the second switch K2 is a manual control switch. The second circuit includes a contact of the first electromagnetic mechanism DC1 and a coil of a second electromagnetic mechanism DC2 which are connected in series. The third circuit includes a contact of the second electromagnetic mechanism DC2 and a control mechanism of a release YR which are connected in series, where an action mechanism of the release YR is connected to the circuit breaker module 130.

In some embodiments of the present application, the first circuit further includes a third electromagnetic mechanism DC3, and a coil of the third electromagnetic mechanism DC3 is connected in parallel with the coil of the first electromagnetic mechanism DC1.

The apparatus 200 further includes a second controller 320. The second controller 320 is configured to determine, according to a change in a state of a contact of the third electromagnetic mechanism DC3, that a fault occurs in the energy storage system 110 and/or the power system 120.

The state of the contact of the third electromagnetic mechanism DC3 includes an off state or a closed state.

A resistance and voltage across the contact of the third electromagnetic mechanism DC3, and a current passing through the contact of the third electromagnetic mechanism can reflect the state of the contact of the third electromagnetic mechanism DC3. Therefore, a change of the state of the contact of the third electromagnetic mechanism DC3 can be determined according to a change of the resistance and voltage across the contact of the third electromagnetic mechanism DC3, and the current passing through the contact of the third electromagnetic mechanism DC3.

For example, the third electromagnetic mechanism DC3 is a normally open electromagnetic mechanism. When the first switch K1 and/or the second switch K2 change/changes from a closed state to an off state, the coil of the third electromagnetic mechanism DC3 changes from a power-on state to a power-off state, thereby driving the contact of the third electromagnetic mechanism DC3 to change from a closed state to an off state. When the contact of the third electromagnetic mechanism DC3 is disconnected, the voltage across the contact of the third electromagnetic mechanism DC3 increases. The second controller 210 may determine that a fault occurs in the energy storage system 110 and/or the power system 120 when the voltage across the contact of the third electromagnetic mechanism DC3 increases (or is greater than or equal to a preset voltage threshold).

For another example, the third electromagnetic mechanism DC3 is a normally closed electromagnetic mechanism. When the first switch K1 and/or the second switch K2 change/changes from the closed state to the off state, the coil of the third electromagnetic mechanism DC3 changes from the power-on state to the power-off state, thereby driving the contact of the third electromagnetic mechanism DC3 to change from the off state to the closed state. When the contact of the third electromagnetic mechanism DC3 is closed, the current passing through the contact of the third electromagnetic mechanism DC3 increases. The second controller 310 may determine that a fault occurs in the energy storage system 110 and/or the power system 120 when the current passing through the contact of the third electromagnetic mechanism DC3 increases (or is greater than or equal to a current threshold).

In the embodiment of the present application, the second controller 310 can be used to promptly and accurately determine, according to the change in the state of the contact of the third electromagnetic mechanism DC3, that a fault occurs in the energy storage system 110 and/or the power system 120.

In some embodiments of the present application, the control circuit 210 is configured to drive the circuit breaker module 130 to change from the on state to the off state through the release YR when the switch module K changes from the closed state to the off state.

In this case, as shown in FIG. 8, the second circuit may further include a fourth switch K4, and the fourth switch K4 is connected in series with the contact of the first electromagnetic mechanism DC1 and the control mechanism of the release TY, where the first electromagnetic mechanism DC1 is a normally open electromagnetic mechanism.

The apparatus 200 further includes a third controller 330. The third controller 330 is configured to control the fourth switch K4 to change from the closed state to the off state when it is determined that a fault occurs in the energy storage system 110 and/or the power system 120.

Optionally, in this embodiment, the second controller 320 may send information indicating that a fault occurs in the energy storage system 110 and/or the power system 120 to the third controller 330.

By arranging the fourth switch K4 in the second circuit, when some other devices in the control circuit 210, such as the first electromagnetic mechanism DC1, cannot be disconnected normally, the coil of the second electromagnetic mechanism DC2 in the second circuit can be powered off by disconnecting the redundantly arranged fourth switch K4, thereby driving the contact of the second electromagnetic mechanism DC2 in the third circuit to change, enabling the external signal of the control mechanism of the release YR to change, and driving a movement mechanism of the release YR to move to drive the circuit breaker module 130 to be disconnected. In this way, the circuit breaker module 130 can be disconnected timely and reasonably.

Optionally, in this embodiment, the second controller 320 may be connected to the fourth switch K4 via a mechanical movement mechanism. When it is determined that a fault occurs in the energy storage system 110 and/or the power system 120, the second controller 320 may control the mechanical movement mechanism to move, thereby enabling the fourth switch K4 to be disconnected through the movement of the mechanical movement mechanism.

Optionally, in this embodiment, the third controller 330 may be configured to adjust a second input signal in a sensing mechanism of a second electronic control device DK2 so as to control a contact of the second electronic control device DK2 to change from a closed state to an off state, where the second input signal includes a current, voltage, impedance, frequency, temperature, pressure or light signal switch and the contact of the second electronic control device DK2 is the fourth switch K4.

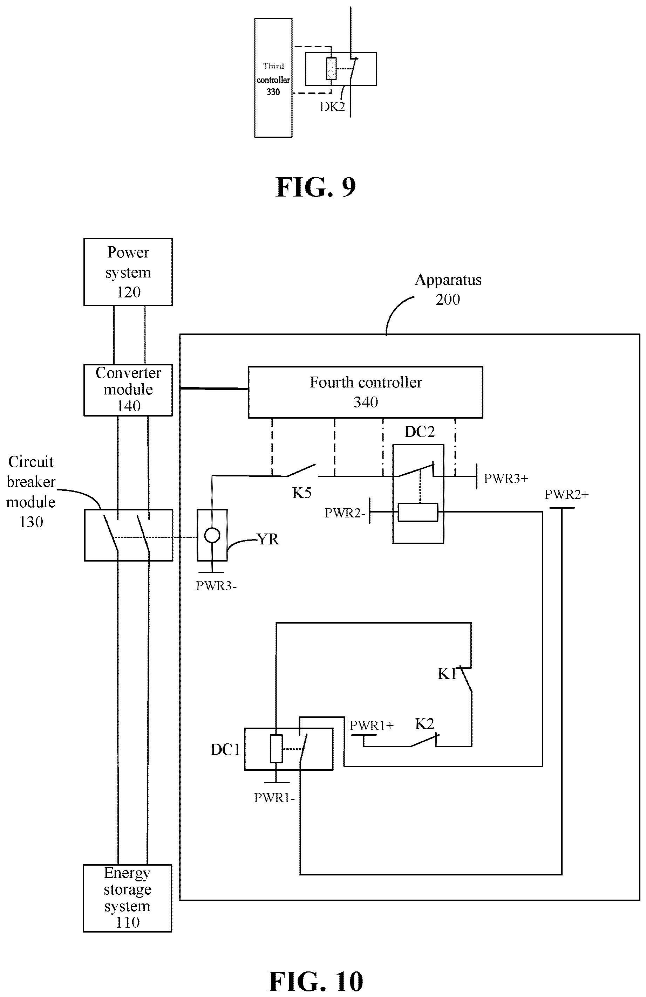

As shown in FIG. 9, the third controller 330 may adjust the input signal in the sensing mechanism of the second electronic control device DK2 to enable the contact of the first electronic control device DK1 to be disconnected, so as to achieve the purpose of disconnecting the above fourth switch K4.

For example, the third controller 330 may power on the coil of the second electronic control device DK2, such as a normally closed relay, to control the contact of the second electronic control device DK2 to be disconnected.

In the embodiment of the present application, the input signal of the sensing mechanism of the second electronic control device DK2 can be adjusted through the third controller 330 so that the contact of the second electronic control device DK2 is disconnected, so as to achieve the purpose of disconnecting the fourth switch K4, thereby being capable of disconnecting the circuit breaker module 130 timely and effectively, reducing the fault spread scope, and protecting devices in the energy storage system 110 and the power system 120 as much as possible.

FIG. 10 is a schematic diagram of an apparatus for controlling a circuit breaker module according to an embodiment of the present application.

In some embodiments of the present application, the apparatus 200 may include a control circuit 210, and the control circuit 210 includes a first circuit, a second circuit, and a third circuit.

The first circuit includes a coil of a first electromagnetic mechanism DC1 and a switch module K which are connected in series, where the switch module K includes a first switch K1 and/or a second switch K2, the first switch K1 is an automatic control switch, and the second switch K2 is a manual control switch. The second circuit includes a contact of the first electromagnetic mechanism DC1 and a coil of a second electromagnetic mechanism DC2 which are connected in series. The third circuit includes a contact of the second electromagnetic mechanism DC2 and a control mechanism of a release YR which are connected in series, where an action mechanism of the release YR is connected to the circuit breaker module 130.

In some embodiments of the present application, the control circuit 210 is configured in a mode that when the switch module K changes from a closed state to an off state, the contact of the second electromagnetic mechanism DC2 changes from an off state to a closed state, so that the circuit breaker module 130 changes from the on state to the off state.

For example, the first electromagnetic mechanism DC1 is a normally closed electromagnetic mechanism, the second electromagnetic mechanism DC2 is a normally open electromagnetic mechanism, and the release YR is a shunt release.

When the first switch K1 and/or the second switch K2 in the first circuit are/is disconnected, the coil of the first electromagnetic mechanism DC1 in the first circuit is powered off, so that the contact of the first electromagnetic mechanism DC1 in the second circuit is closed, the coil of the second electromagnetic mechanism DC2 in the second circuit is powered on, the contact of the second electromagnetic mechanism DC2 in the third circuit is closed, and the control mechanism of the release YR in the third circuit is powered on and excited, thereby driving the action mechanism of the release YR to act so as to disconnect the circuit breaker module 130.

For another example, the first electromagnetic mechanism DC1 is a normally open electromagnetic mechanism, the second electromagnetic mechanism DC2 is a normally closed electromagnetic mechanism, and the release YR is a shunt release.

When the first switch K1 and/or the second switch K2 in the first circuit are/is disconnected, the coil of the first electromagnetic mechanism DC1 in the first circuit is powered off, so that the contact of the first electromagnetic mechanism DC1 in the second circuit is disconnected, the coil of the second electromagnetic mechanism DC2 in the second circuit is disconnected, the contact of the second electromagnetic mechanism DC2 in the third circuit is closed, and the control mechanism of the release YR in the third circuit is powered on and excited, thereby driving the action mechanism of the release YR to act to disconnect the circuit breaker module 130.

In the embodiment of the present application, when the first switch and/or the second switch are/is disconnected, the contact of the second electromagnetic mechanism DC2 in the control circuit 210 is enabled to be closed, and then the release YR is used to timely and effectively drive the circuit breaker module 130 to be disconnected.

Optionally, in this embodiment, the third circuit further includes a fifth switch K5, and the fifth switch K5 is connected in series with the contact of the second electromagnetic mechanism DC2 and the control mechanism of the release YR.

The apparatus further includes a fourth controller 340. The fourth controller 340 is configured to control the fifth switch K5 to change from the off state to the closed state when the contact of the second electromagnetic mechanism DC2 changes from the off state to the closed state, so that the circuit breaker module 130 changes from the on state to the off state.

For example, when the first switch K1 and/or the second switch K2 in the first circuit change/changes from the closed state to the off state, the coil of the first electromagnetic mechanism DC1 switches from the power-on state to the power-off state, and the contact of the first electromagnetic mechanism DC1 can switch from the closed state to the off state, so that the coil of the second electromagnetic mechanism DC2 changes from the power-on state to the power-off state, and the contact of the second electromagnetic mechanism DC2 changes from the off state to the closed state.

When the contact of the second electromagnetic mechanism DC2 is closed, the fourth controller 340 may control the fifth switch K5 to be closed to enable the third circuit to be connected. The control mechanism (coil) of the release YR is powered on and excited, which drives the action mechanism of the release YR to act, thereby driving the circuit breaker module 130 to be disconnected.

Similar to the third electromagnetic mechanism DC3, a voltage and resistance across the contact of the second electromagnetic mechanism DC2 and a current passing through the second electromagnetic mechanism can reflect the state of the contact of the second electromagnetic mechanism DC2. Therefore, the state of the contact of the second electromagnetic mechanism DC2 can be determined according to the resistance and voltage across the contact of the second electromagnetic mechanism DC2, and the current passing through the contact of the third electromagnetic mechanism DC2.

For example, the contact of the second electromagnetic mechanism DC2 changes from the off state to the closed state, and the current passing through the contact of the second electromagnetic mechanism DC2 increases. Thus, when the current passing through the contact of the second electromagnetic mechanism DC2 increases, it can be determined that the contact of the second electromagnetic mechanism DC2 is closed.

In the embodiment of the present application, when the contact of the second electromagnetic mechanism DC2 is closed, that is, when a fault occurs in the energy storage system 110 and/or the power system 120, the fifth switch K5 is controlled to be closed through the fourth controller 340, so that the third circuit can be flexibly controlled to be powered on, thereby being capable of flexibly controlling the circuit breaker module 130 to be disconnected.

Optionally, the fourth controller 340 is configured to determine a current or power between the energy storage system 110 and the power system 120 when the contact of the second electromagnetic mechanism DC2 changes from the off state to the closed state. When the current or power between the energy storage system 110 and the power system 120 is less than or equal to a preset threshold, the fifth switch K5 is controlled to change from the off state to the closed state. Or, when the current or power between the energy storage system 110 and the power system 120 is greater than or equal to the preset threshold, the current or power between the energy storage system 110 and the power system 120 is controlled to decrease, and the fifth switch K5 is controlled to change from the off state to the closed state after preset time from when the contact of the second electromagnetic mechanism DC2 changes from the off state to the closed state.

That is to say, in this embodiment, when the contact of the second electromagnetic mechanism DC2 is closed, if the current or power between the energy storage system 110 and the power system 120 is less than or equal to the preset threshold, the fifth switch K5 may be immediately controlled to be closed; if the current or power between the energy storage system 110 and the power system 120 is greater than or equal to the preset threshold, the current or power between the energy storage system 110 and the power system 120 may be first controlled to decrease, and then the fifth switch K5 may be controlled to be closed after preset time from when the contact of the second electromagnetic mechanism DC2 is closed.

For example, when the contact of the second electromagnetic mechanism DC2 is closed, if the current between the energy storage system 110 and the power system 120 is less than or equal to 5 amperes (A), the fifth switch K5 is controlled to be closed; if the current between the energy storage system 110 and the power system 120 is greater than 5A, the current between the energy storage system 110 and the power system 120 may be controlled to decrease first, and the fifth switch K5 is controlled to be closed after 10S from when the contact of the second electromagnetic mechanism DC2 is closed.

When controlling the current or power between the energy storage system 110 and the power system 120 to decrease, regardless of whether the current or power is reduced to less than or equal to the preset threshold, the fifth switch K5 is controlled to be closed after preset time from when the contact of the second electromagnetic mechanism DC2 is closed.

In the embodiment of the present application, when the contact of the second electromagnetic mechanism DC2 is closed, the fifth switch may also be controlled to be closed in combination with the current or power between the energy storage system 110 and the power system 120. That is to say, when the current or power between the energy storage system 110 and the power system 120 is relatively small, the fifth switch K5 may be immediately controlled to be closed; when the current or power between the energy storage system 110 and the power system 120 is relatively large, the current or power between the energy storage system 110 and the power system 120 may be first controlled to decrease, and then the fifth switch K5 is controlled to be closed.

In this way, the impact of a large current on the energy storage system 110 can be reduced, so that the performance of the energy storage system 110 can be improved and the service life of the energy storage system 110 can be prolonged. Optionally, in this embodiment, the fourth controller 340 may obtain the current or power between the energy storage system 110 and the power system 120 through the converter module 140. For example, as shown in FIG. 10, the fourth controller 340 can communicate with the converter module 140.

Optionally, the fourth controller 340 may also be the converter module 340. The converter module 340 can record the current or power between the energy storage system 110 and the power system 120.

Optionally, the fourth controller 340 may be connected to the first switch K5 via a mechanical movement mechanism. The fourth controller 340 may control the mechanical movement mechanism to move, thereby enabling the fifth switch K5 to be disconnected.

Optionally, the first controller 340 is used to adjust a third input signal in a sensing mechanism of a third electronic control device DK3 to control the contact of the third electronic control device DK3 to change from an off state to a closed state. The second input signal includes a current, voltage, impedance, frequency, temperature, pressure or light signal, and the contact of the third electric control device DK3 is the above fifth switch K5.

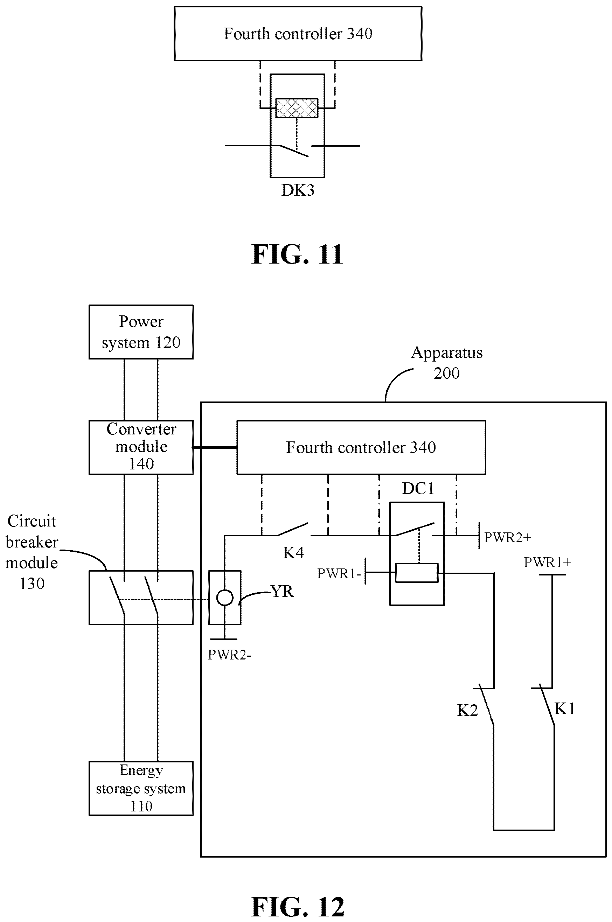

Optionally, as shown in FIG. 11, the fourth controller 340 may enable the contact of the third electronic control device DK3 to be closed by adjusting the input signal in the sensing mechanism of the third electronic control device DK3.

For example, the fourth controller 340 may power on the sensing mechanism (coil) of the third electronic control device DK3, such as an electromagnetic relay, to control the contact of the third electronic control device DK3 to be disconnected.

In the embodiment of the present application, the input signal of the sensing mechanism of the third electronic control device DK3 can be adjusted through the fourth controller 340 so that the contact of the third electronic control device DK3 is disconnected, so as to achieve the purpose of disconnecting the fifth switch, thereby being capable of disconnecting the circuit breaker module 130, reducing the fault spread scope, and protecting devices in the energy storage system 110 and the power system 120 as much as possible.

In some embodiments of the present application, the apparatus 200 for controlling the circuit breaker module 130 includes the first circuit, the second circuit and the third circuit mentioned above, as well as the first controller 310, the second controller 320, the third controller 330, and the fourth controller 340.

FIG. 12 is a schematic diagram of an apparatus for controlling a circuit breaker module according to an embodiment of the present application.

In some embodiments of the present application, the apparatus 200 includes a control circuit 210, and the control circuit 210 includes a first circuit and a second circuit.

The first circuit includes a coil of a first electromagnetic mechanism DC1 and a switch module K which are connected in series, where the switch module K includes a first switch K1 and/or a second switch K2, the first switch K1 is an automatic control switch, and the second switch K2 is a manual control switch.

The second circuit includes a contact of the first electromagnetic mechanism DC1 and a control mechanism of the release YR which are connected in series, where the action mechanism of the release YR is connected to the circuit breaker module 130.

In some embodiments of the present application, the control circuit 210 is configured to drive the circuit breaker module 130 to change from the on state to the off state through the release YR when the switch module K changes from the closed state to the off state.

Optionally, the control circuit 210 is configured in a mode that when the switch module K changes from the closed state to the off state, the contact of the first electromagnetic mechanism DC1 changes from the closed state to the off state, so that the circuit breaker module 130 changes from the on state to the off state.

For example, the first electromagnetic mechanism DC1 is a normally open electromagnetic mechanism, and the release YR is an undervoltage release. The first switch K1 and/or the second switch K2 are/is disconnected, so that the coil of the first electromagnetic mechanism DC1 in the first circuit is powered off, which drives the contact of the first electromagnetic mechanism DC2 in the second circuit to be disconnected, and the voltage of the coil (control mechanism) of the release YR in the second circuit is lower than the rated voltage of the release, thereby driving the action mechanism of the release YR to act so as to drive the circuit breaker module 130 to be disconnected.

Optionally, the control circuit 210 is configured to close the contact of the first electromagnetic mechanism DC1 when the first switch K1 and/or the second switch K2 are/is disconnected, so as to enable the circuit breaker module 130 to be powered off.

For example, the first electromagnetic mechanism DC1 may be a normally closed electromagnetic mechanism, and the release YR may be a shunt release. The first switch K1 and/or the second switch K2 are/is disconnected, so that the coil of the first electromagnetic mechanism DC1 in the first circuit is powered off, the contact of the first electromagnetic mechanism DC2 in the second circuit is driven to be closed, and the coil (control mechanism) of the release YR in the second circuit is powered on and excited, thereby driving the action mechanism of the release YR to act so as to drive the circuit breaker module 130 to be disconnected.

In some embodiments of the present application the second circuit further includes a fifth switch K5, and the fifth switch is connected in series with the contact of the first electromagnetic mechanism DC1 and the control mechanism of the release YR.

The apparatus 200 further includes a fourth controller 340, configured to control the fifth switch K5 to change from an off state to a closed state when the contact of the first electromagnetic mechanism DC1 changes from an off state to a closed state, so that the circuit breaker module 130 changes from the on state to the off state.

Exemplarily, when the first switch K1 and/or the second switch K2 change/changes from a closed state to an off state, the coil of the first electromagnetic mechanism changes from an on state to an off state, thereby driving the contact of the first electromagnetic mechanism DC1 (normally closed relay) to be closed. The fourth controller can control the fifth switch K5 to be closed when the contact of the first electromagnetic mechanism DC1 is closed, so as to enable the control mechanism (coil) of the release YR (shunt release) to be powered on and excited, and drive the action mechanism of the release YR to act, thereby driving the circuit breaker module 130 to be powered off.

Optionally, in this embodiment, the fourth controller 340 is configured to determine a current or power between the energy storage system 110 and the power system 120 when the contact of the second electromagnetic mechanism DC1 changes from the off state to the closed state. When the current or power between the energy storage system 110 and the power system 120 is less than or equal to a preset threshold, the fifth switch K5 is controlled to change from the off state to the closed state. Or, when the current or power between the energy storage system 110 and the power system 120 is greater than or equal to the preset threshold, the current or power between the energy storage system 110 and the power system 120 is controlled to decrease, and the fifth switch K5 is controlled to change from the off state to the closed state after preset time from when the contact of the second electromagnetic mechanism DC1 changes from the off state to the closed state.

Optionally, the fourth controller 340 may obtain the current or power between the energy storage system 110 and the power system 120 through the converter module 140.

Optionally, the fourth controller 340 may also be the converter module 340. The converter module 340 can record the current or power between the energy storage system 110 and the power system 120 and meanwhile can also control the fifth switch K5 to be closed.

The description of the fourth controller 340 controlling the fifth switch K5 to be closed in FIG. 12 is similar to the content of the fourth controller 340 controlling the fifth switch K5 to be closed in FIG. 10 and FIG. 11, and is not repeated in the present application.

In some embodiments of the present application, the second controller 320 is further configured to send indication information to the first controller 310 when it is determined that a fault occurs in the energy storage system 110 and/or the power system 120.

Optionally, in this embodiment, the first controller 310 and the second controller 320 may communicate with each other.

Exemplarily, the first controller 310 may be an EMS, and the second controller may be a BMS of the energy storage system 110. The BMS may send indication information to the EMS when it is determined that a failure occurs in the energy storage system 110 and/or the power system 120.

In the embodiment of the present application, the second controller 320 can send the indication information of a fault occurring in the energy storage system 110 and/or the power system 120 to the first controller 310, so that the first controller 310 can determine whether a state of manually switching the switch or a state of automatically switching the switch is available when a fault occurs in the energy storage system 110 and/or the power system 120.

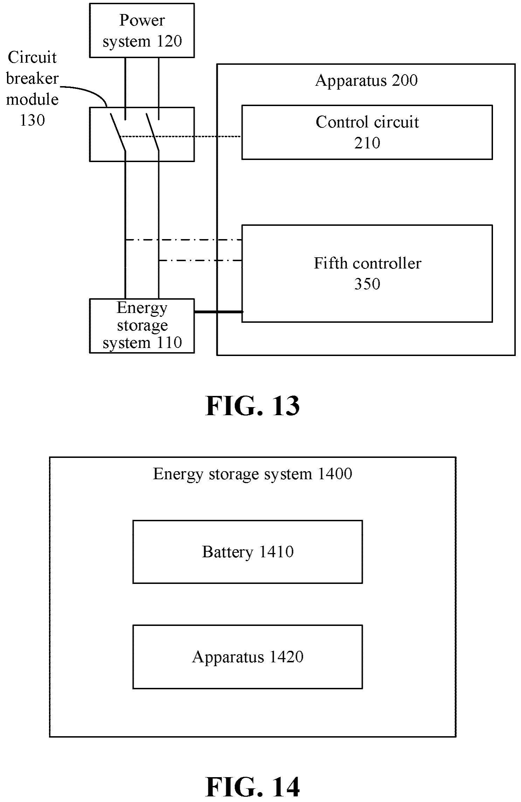

In some embodiments of the present application, as shown in FIG. 13, the apparatus 200 further includes a fifth controller 350, configured to control a direct current switch in the energy storage system 110 to change from a closed state to an off state when the circuit breaker module 130 is in an off state.

In the embodiment of the present application, the energy storage system 110 further includes the direct current switch. For example, the energy storage system 110 may include a plurality of battery clusters, each of the battery clusters is provided with a corresponding battery cluster management unit (CMU), and is connected in parallel to a battery collection panel (BCP) through the CMU to access the power grid. The CMU may include a direct current switch.

In this embodiment, the direct current switch may include a circuit breaker or a contactor, etc.

The on-load breaking capacity of the direct current switch is low or the on-load breaking operation cannot be performed. Therefore, the direct current switch can be controlled to be disconnected after the circuit breaker module 130 is disconnected.

For example, the fifth controller 350 may collect the current passing through the circuit breaker module 130 to determine whether the circuit breaker module 130 is disconnected. When the circuit breaker module 130 is disconnected, the direct current switch in the energy storage system 110 is disconnected.

Optionally, the fifth controller 350 may communicate with the BMS of the energy storage system 110 to control the BMS to cut off the direct current switch of the energy storage system 110.

Optionally, the fifth controller 350 may be a BMS of the energy storage system. For example, the BMS can determine whether the circuit breaker module 130 is disconnected through the current of the circuit breaker module 130. The BMS controls the direct current switch in the energy storage system 110 to be disconnected when the circuit breaker module 130 is disconnected.

In the embodiment of the present application, the direct current switch can be controlled to be disconnected when the circuit breaker module 130 is in the off state, which can reduce the impact of the arcing phenomenon caused by the direct current switch being disconnected under load on the energy storage system 110.

In some embodiments of the present application, the second controller 320 and the third controller 330 are the same controller.

In the embodiment of the present application, the second controller 320 and the third controller 330 are the same controller, which can realize the integration of input of a fault signal (determining that a fault occurs in the energy storage system 110 and/or the power system 120) and output of the fault signal (disconnecting the fourth switch K4), thereby improving the efficiency of outputting the fault signal and facilitating timely disconnecting the circuit breaker module 130. At the same time, output of the fault signal can also be controlled by a fault input signal to perform redundancy control on the second circuit through the fourth switch K4, so as to accurately and effectively disconnect the circuit breaker module 130.

In some embodiments of the present application, the second controller 320 and the third controller 330 may also communicate with the BMS in the energy storage system 110.

In some embodiments of the present application, the second controller 320 and the third controller 330 may be the BMS in the energy storage system 110.

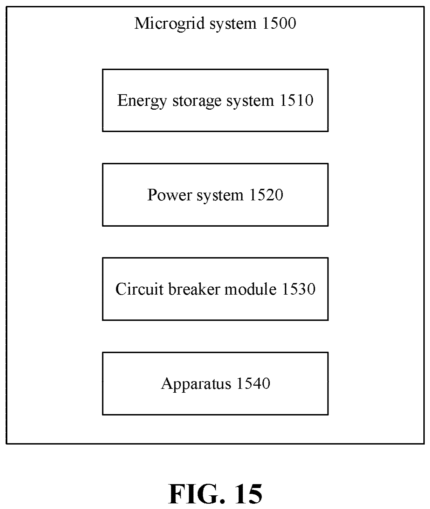

Embodiments of the present application further provides an energy storage system and a microgrid system. The energy storage system and the microgrid system provided in the embodiments of the present application are exemplarily introduced below in conjunction with FIG. 14 and FIG. 15.

FIG. 14 is a schematic block diagram of an energy storage system 1400 according to an embodiment of the present application; As shown in FIG. 14, a circuit breaker module is connected between the energy storage system 1400 and a power system. The energy storage system 1400 includes a battery 1410 and an apparatus 1420 for controlling a circuit breaker module according to an embodiment of the present application.

The apparatus can be used to control the circuit breaker module to be disconnected.

For the relevant description of the energy storage system 1400, the battery 1410, and the apparatus 1420 for controlling the circuit breaker module, etc., reference may be made to the above relevant content, and the present application will not repeat the description for the sake of brevity.

FIG. 15 is a schematic block diagram of a microgrid system according to an embodiment of the present application. As shown in FIG. 15, the microgrid system 1500 includes an energy storage system 1510, a power system 1520, a circuit breaker module 1530, and an apparatus 1540 for controlling the circuit breaker module.

For the description of the energy storage system 1510, the power system 1520, the circuit breaker module 1530, and the apparatus 1540 for controlling the circuit breaker module, reference may be made to the above relevant content, and the present application will not repeat the description for the sake of brevity.

Although the present application has been described with reference to the preferred embodiments, various improvements can be made thereto and components thereof can be replaced with equivalents without departing from the scope of the present application. In particular, the technical features mentioned in the various Examples can be combined in any manner as long as there is no structural conflict. The present application is not limited to the particular Examples disclosed herein, but rather includes all technical solutions falling within the scope of the claims.

## Claims

1. An apparatus for controlling a circuit breaker module, wherein the circuit breaker module is connected between an energy storage system and a power system, when a working state of the circuit breaker module is an on state, a path for transmitting electric energy between the energy storage system and the power system is in an on state, and when the working state of the circuit breaker module is an off state, the path for transmitting electric energy between the energy storage system and the power system is in an off state; and the apparatus comprises a control circuit, the control circuit comprises a switch module and a release, and the control circuit is configured to drive the circuit breaker module to change from the on state to the off state through the release when a state of the switch module changes.

2. The apparatus according to claim 1, wherein the control circuit comprises:
a first circuit, the first circuit comprising a coil of a first electromagnetic mechanism and a switch module which are connected in series, wherein the switch module comprises a first switch and/or a second switch, the first switch is an automatic control switch, and the second switch is a manual control switch;
a second circuit, the second circuit comprising a contact of the first electromagnetic mechanism and a coil of a second electromagnetic mechanism which are connected in series; and
a third circuit, the third circuit comprising a contact of the second electromagnetic mechanism and a control mechanism of the release which are connected in series, wherein an action mechanism of the release is connected to the circuit breaker module.

3. The apparatus according to claim 2, wherein the second circuit further comprises a third switch, the third switch is connected in series with the contact of the first electromagnetic mechanism and the coil of the second electromagnetic mechanism, and the second switch and the third switch are configured in a mode that states of the second switch and the third switch change simultaneously by pressing a button, and the states of the second switch and the third switch are the same.

4. The apparatus according to claim 2 or 3, wherein the control circuit is configured to drive the circuit breaker module to change from the on state to the off state through the release when the switch module changes from a closed state to an off state.

5. The apparatus according to claim 4, wherein the apparatus further comprises:
a first controller, configured to control the first switch to change from a closed state to an off state when it is detected that a fault occurs in the energy storage system and/or the power system.

6. The apparatus according to claim 5, wherein the first controller is configured to adjust a first input signal in a sensing mechanism of a first electronic control device so as to control a contact of the first electronic control device to change from a closed state to an off state, wherein the contact of the first electronic control device is the first switch, and the first input signal comprises a current, voltage, impedance, frequency, temperature, pressure or light signal.

7. The apparatus according to claim 5 or 6, wherein the first circuit further comprises a coil of a third electromagnetic mechanism, and the coil of the third electromagnetic mechanism is connected in parallel with the coil of the first electromagnetic mechanism; and
the apparatus further comprises:
a second controller, configured to determine, according to a change in a state of a contact of the third electromagnetic mechanism, that a fault occurs in the energy storage system and/or the power system.

8. The apparatus according to claim 7, wherein the second circuit further comprises a fourth switch, and the fourth switch is connected in series with the contact of the first electromagnetic mechanism and the control mechanism of the release, wherein the first electromagnetic mechanism is a normally open electromagnetic mechanism; and
the apparatus further comprises:
a third controller, configured to control the fourth switch to change from a closed state to an off state when it is determined that a fault occurs in the energy storage system and/or the power system.

9. The apparatus according to claim 8, wherein the third controller is configured to adjust a second input signal in a sensing mechanism of a second electronic control device so as to control a contact of the second electronic control device to change from a closed state to an off state, wherein the contact of the second electronic control device is the fourth switch, and the second input signal comprises a current, voltage, impedance, frequency, temperature, pressure or light signal.

10. The apparatus according to any one of claims 4 to 9, wherein the control circuit is configured in a mode that when the switch module changes from the closed state to the off state, the contact of the second electromagnetic mechanism changes from an off state to a closed state, so that the circuit breaker module changes from the on state to the off state.

11. The apparatus according to claim 10, wherein the third circuit further comprises a fifth switch, and the fifth switch is connected in series with the contact of the second electromagnetic mechanism and the control mechanism of the release; and
the apparatus further comprises:
a fourth controller, configured to control the fifth switch to change from an off state to a closed state when the contact of the second electromagnetic mechanism changes from the off state to the closed state, so that the circuit breaker module changes from the on state to the off state.

12. The apparatus according to claim 11, wherein the fourth controller is configured to:
determine a current or power between the energy storage system and the power system when the contact of the second electromagnetic mechanism changes from the off state to the closed state;
control the fifth switch to change from the closed state to the off state when the current or power between the energy storage system and the power system is less than or equal to a preset threshold; or,
control the current or power between the energy storage system and the power system to decrease when the current or power between the energy storage system and the power system is greater than or equal to the preset threshold, and control the fifth switch to change from the off state to the closed state after preset time from when the contact of the second electromagnetic mechanism changes from the off state to the closed state.

13. The apparatus according to any one of claims 10 to 12, wherein the fourth controller is configured to adjust a third input signal of a sensing mechanism of a third electronic control device so as to control a contact of the third electronic control device to change from an off state to a closed state, wherein the contact of the third electronic control device is the fifth switch, and the third input signal comprises a current, voltage, impedance, frequency, temperature, pressure or light signal.

14. The apparatus according to any one of claims 7 to 13, wherein the second controller is further configured to send indication information to the first controller when it is determined that a fault occurs in the energy storage system and/or the power system.

15. The apparatus according to any one of claims 1 to 14, wherein the apparatus further comprises:
a fifth controller, configured to control a direct current switch in the energy storage system to change from a closed state to an off state when the circuit breaker module is in the off state.

16. The apparatus according to any one of claims 8 to 13, wherein the second controller and the third controller are the same controller.

17. An energy storage system, wherein the energy storage system comprises a battery and the apparatus for controlling a circuit breaker module according to any one of claims 1 to 16, and the circuit breaker module is connected between the energy storage system and a power system.

18. A microgrid system, wherein the microgrid comprises an energy storage system, a power system, a circuit breaker module, and the apparatus for controlling the circuit breaker module according to any one of claims 1 to 16.
